Europäisches Patentamt

European Patent Office

Office européen des brevets

(11) Publication number: **0 380 804**
**A1**

## (12) EUROPEAN PATENT APPLICATION

(21) Application number: **89123592.1**

(22) Date of filing: **20.12.89**

(51) Int. Cl.5: **G01N 27/30**

(30) Priority: **20.12.88 CS 8444/88**

(43) Date of publication of application:
**08.08.90 Bulletin 90/32**

(84) Designated Contracting States:
**AT BE DE FR GB**

(71) Applicant: **CHIRANA Vyzkumny ustav
zdravotnicke techniky koncernova ucelova
organizace
No 3 Kamenice
Brno(CS)**

(72) Inventor: **Krejci, Jan, RNDr
Tisnov
Jiráskova 593(CS)**

(74) Representative: **Patentanwälte Beetz sen. -
Beetz jun. Timpe - Siegfried -
Schmitt-Fumian- Mayr
Steinsdorfstrasse 10
D-8000 München 22(DE)**

(54) **Symmetrical probe for enzymatic measurements.**

(57) The invention relates to a symmetrical probe for enzymatic measurements, comprising
- a glass body (4), the measuring end thereof having a polished front surface (1), and comprising an electrolyte reservoir (14),
- a covering diaphragm (10) covering the measuring end with the polished front surface (1) of the glass body (4),
- metal measuring electrodes (2, 3) provided within the glass body (4) and ending at the measuring end thereof, being covered by the diaphragm (10), and being connected to connecting wires (12) provided in the glass body (4),
- an electrolyte (5) provided in the electrolyte reservoir (14),
- an Ag/AgCl reference electrode (6) provided in the longitudinal axis (15) of the electrolyte reservoir (14), and being connected to a connecting wire (12),
- a glass tube (13) provided around the Ag/AgCl reference electrode (6), and
- an auxiliary electrode (7) provided on the glass tube (13), being arranged symmetrically with respect to the measuring electrodes (2, 3), and being connected to a connecting wire (12).
The symmetrical arrangement leads to a considerable improvement of the electrode performances.

Fig. 9

## Symmetrical probe for enzymatic measurements

The present invention relates to a probe specifically provided for enzymatic measurements.

Enzymatic probes consists of two basic parts, the diaphragm system, and the electrode system.

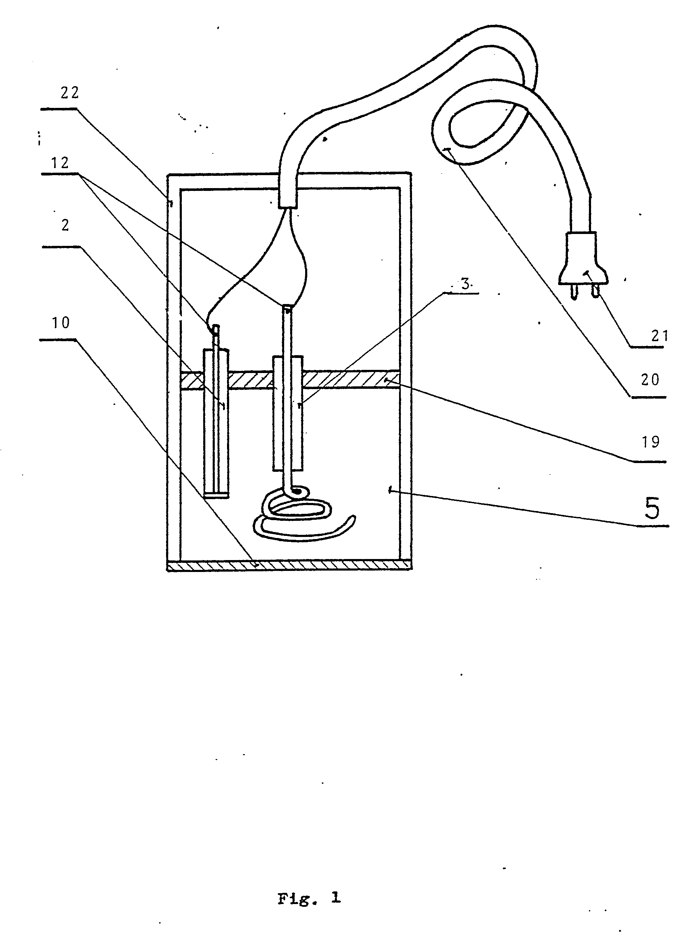

Such an electrode system comprises a set of at least two electrodes arranged to one single operation assembly. Such an electrode system is shown in Figure 1. The two measuring electrodes 2 and 3 are provided within a holder 19 fixed within a housing 22. The measuring electrodes 2 and 3 are connected to connecting wires 12 of a cable 20 comprising a connector 21 for connecting the electrodes to a processing unit.

The electrode is a part of the electrode system consisting of an electrical conductor and an electrolyte, which may be a solution and/or a melt and/or a solid electrolyte.

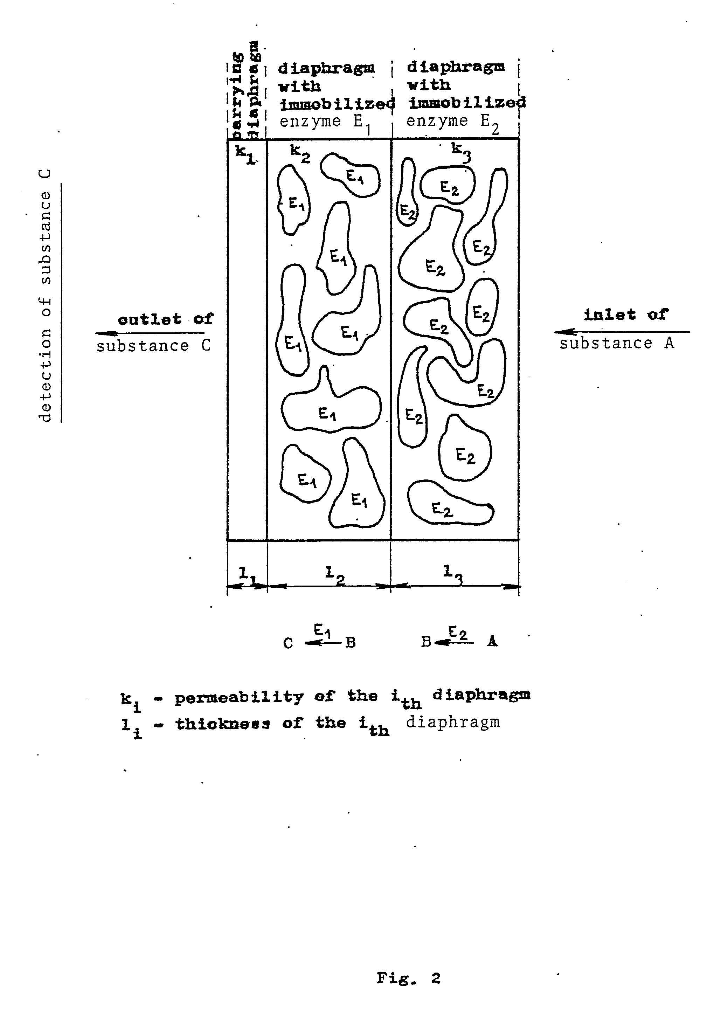

A diaphragm system usually consists of one diaphragm or a set of at least two mutually contacting diaphragms differing from each other both by response and chemical composition and controlling the inlet of the substance to be measured to the electrode system as shown in Figure 2 and in which selective analytical reactions occur enabling to detect the substance to be determined. Figure 2 shows a diaphragm arrangement consisting of three contacting diaphragms comprising immobilzed enzymes E1, and E2, respectively. The first diaphragm is a carrying diaphragm. The respective permeabilities are $k_1$, $k_2$, and $k_3$, respectively. The enzymes immobilized within the diaphragms are designated by E1 and E2, respectively. The thickness of the respective diaphragms is indicated in Figure 2 by L1, L2, and L3, respectively. At the inlet side of the diaphragm arrangement, substance A is brought in contact with the enzyme molecules E2. These enzymes transform substance A into substance B. Substance B is converted by enzyme E1 into substance C which, at the outlet side of the diaphragm system, is detected by means of the electrode arrangement.

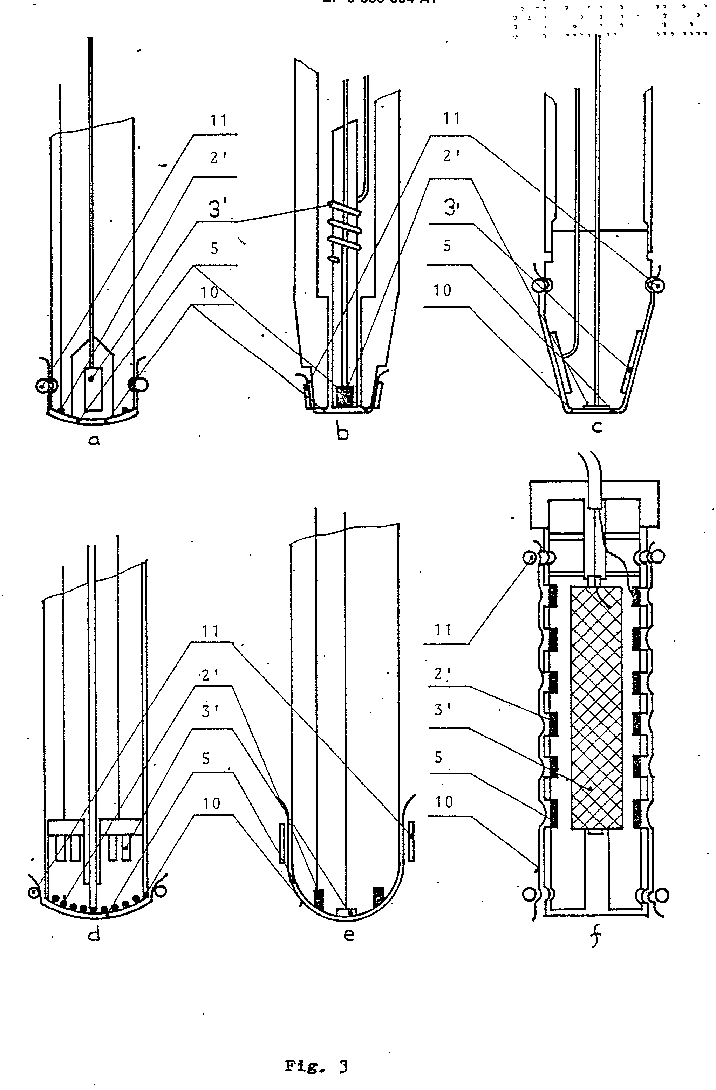

Some examples of typical prior art electrode arrangements used in electrochemistry and analytical chemistry are shown in Figure 3 (cf. V. Linek, V. Vacek, J. Sinkule, Dissolved Oxygen Probes, in W.C. Robinson (editor) Comprehensive Biotechnology, Vol. 3, Chapter 22, Pergamon Press, Oxford 1984). Figures 3a to 3f show different prior art electron arrangements, each comprising a cathode 2', an anode 3', and electrolyte 5, a diaphragm 10, and a holding ring 11 for the diaphragm. Accordingly, Figure3 shows that, according to the prior art, very different electrode arrangements have been used.

The probe operation has been theoretically discussed in detail (of. e.g. Linek, V., Vacek, V., Sinkule, J., Dissolved Oxygen Probes, loc. cit.; Koryta, J., Štulik, K., Ion Selective Electrodes, Academia, Prague, 1984; Veselý, J., Weiss, D., Štulik, K., Analysis using Ion Selective Electrodes, SNTL, Praque, 1979; Dvorák, J., Koryta, J., Electrochemistry, Academia, Prague, 1983; Rieger, P.H., Electrochemistry, Prentice - Hall, Inc., Englewood Cliffs 1987).

There is great number of substances which can be detected by an enzymatic reaction during which oxygen is dissolved. The oxygen loss during the enzymatic reaction is proportional to the concentration of the analyzed substance. If this is really the case, the diaphragm system has beeen suitable arranged. In most cases, the oxygen loss is detected electrochemically. The theoretical principles of oxygen probes have been described in detail (cf. e.g. Linek, V., Vacek, V., Sinkule, J., Dissolved Oxygen Probes, loc. cit.).

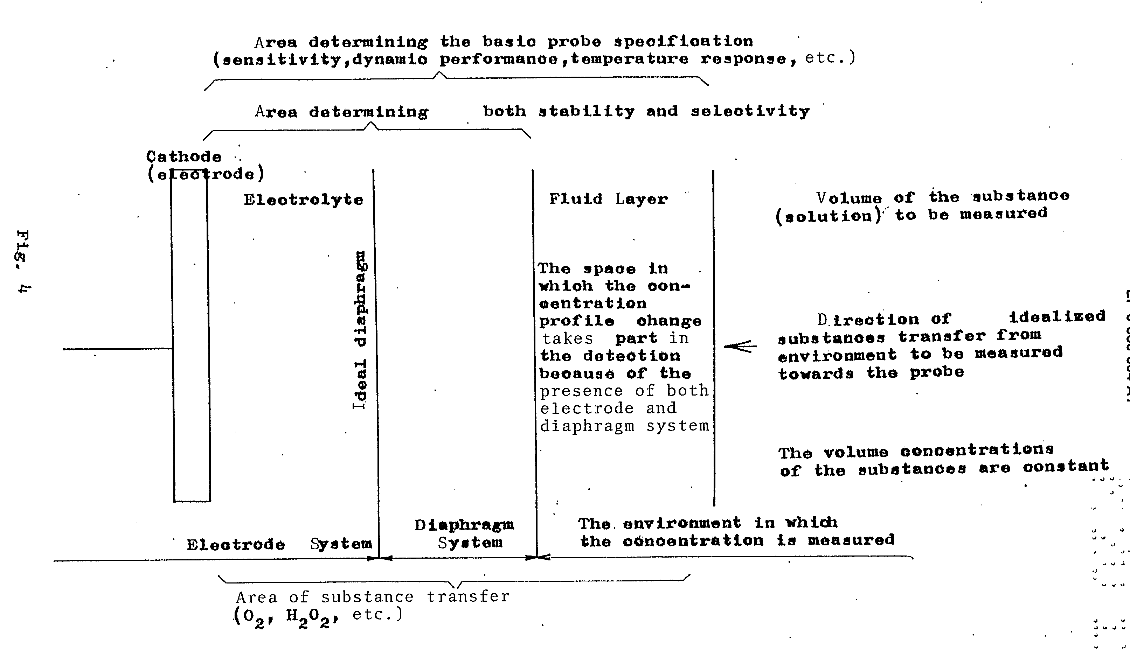

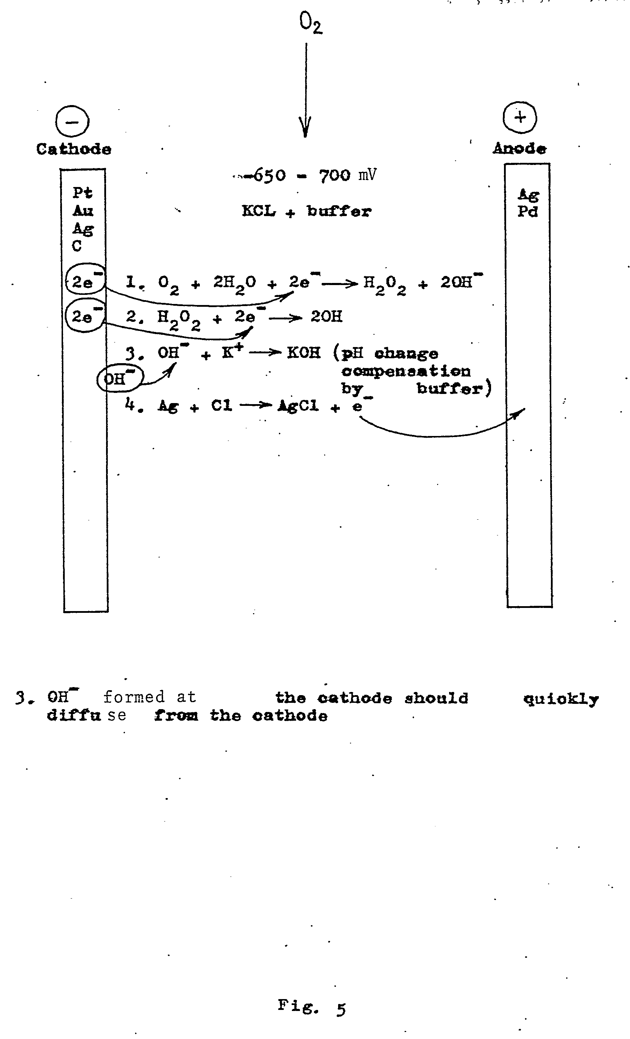

Oxygen probes corresponding to the present state of the art are described in the following. Figure 4 (modified representation of Linek, V., Vacek, V., Sinkule, J.: Dissolved Oxygen Probes, loc. cit.) shows schematically the states at the interfaces between the cathode of the electrode system of an oxygen cell and its surrounding. The contents of Figure 4 shall apply also for the following description. The probe reactions occuring in the so-called Clark cell are diagrammatically shown in Figure 5.

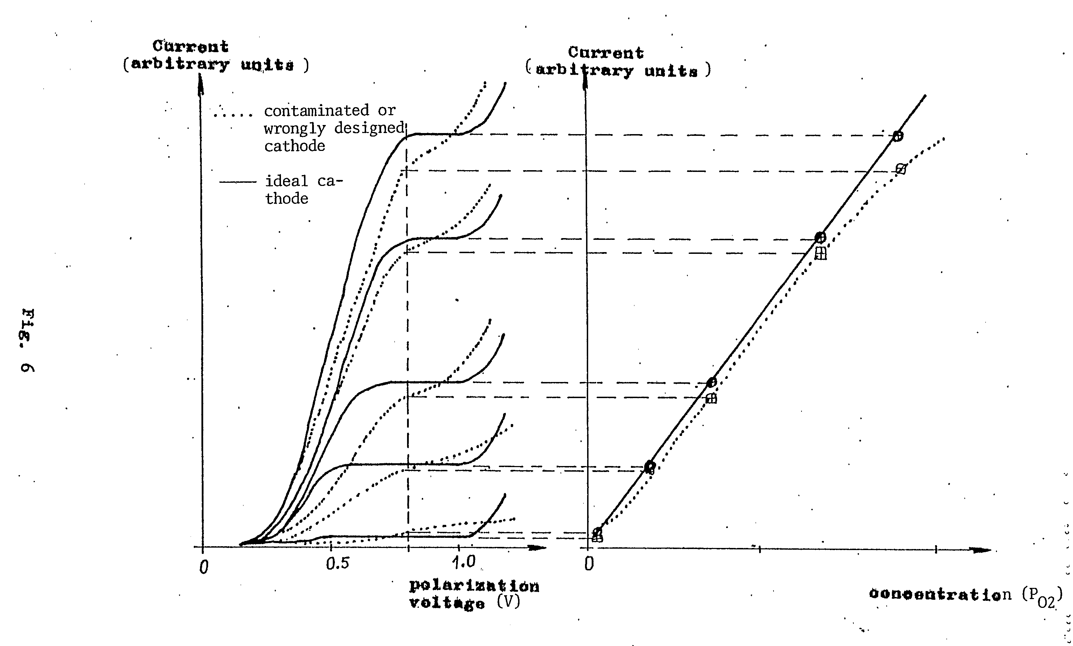

Figure 6 (modified representation of Linek, V., Vacek, V., Sinkule, J., Dissolved Oxygen Probes, loc. cit.) shows typical polarization curves plotted for different oxygen partial pressures.

Figure 7 (in Linek, V., Vacek, V., Sinkule, J., Dissolved Oxygen Probes, loc. cit.) demonstrates the influence of both pH value and cathode material on the polarization curve shape.

Cathode material:

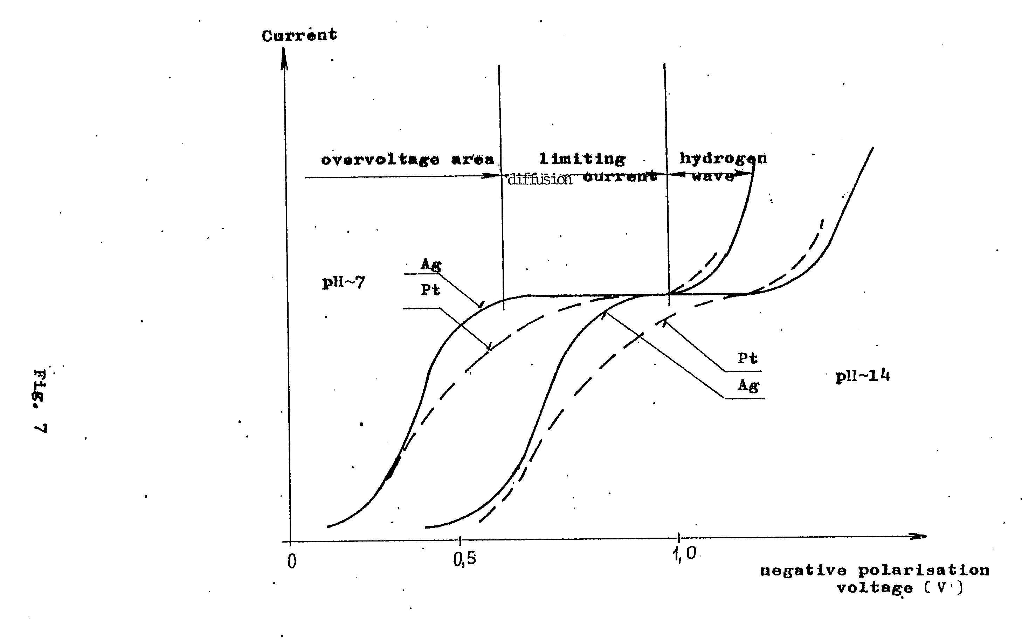

The superior material of the cathode is Ag (see Figure 7). However, the essential disadvantage of this material resides in the fact that it cannot be sealed in glass which is a current requirement for a cathode to achieve the desired high insulating resistance. Other materials used for cathode manufacturing are Au, Pt, and C. Probes made of carbon which has been specially treated have the advantage of presenting no biocompatibility problems. The shape of the polarization curve and the operation performance of the complete probe, as well, depend essentially on the purity of the material used and its treating. Generally, it can be stated the lower the purity of the materials used for the design of the cathode, both the narrower the flat part of the polarization curve and less parallel the polarization curve to the voltage axis in the area of the limiting diffussion current.

The aforementioned facts influence the operation performance of the electrode system essentially, and they may disturb its response linearity (see Figure 5 relating to the ideal and a real, contaminated or not suitably treated cathod. Similiarly, the cathode surface treatment influences the polarization curve shape, too. It has been observed that the optimum roughness should be 1 $\mu$m. Further, the shape of the polarization curve is influenced by size and design of the probe. The purity of the used material influences the way of treatment and the way of interconnecting the leads with the material of the cathode, as well, because during these technological operations, the active cathode surface may be contaminated. Further, some specific requirements are to be met for the other metals. Ag and Pt are unstable metals. Ag can be poisioned easily by minute amounts of $H_2S$ leading to darkening. The Pt operation performance depends on the state of its surface and the manufacturing history (grinding, polishing). The probe reaction becomes slower with Pt in an acid surrounding. The surface of a carbon probe should be activated by a special method (so-called burning). The dimensions of all cathodes as currently in use should not be less than 0.1 mm.

Anode:

The dimensions should be of the order of $10^3$ times greater than those of the cathode. In the ideal case the anode should not be polarizable. Conventionally, Ag/AgCl electrodes have been used. Further, the utilization of Pd in connection with enzymatic probes is known, leading to increased probe stability. It is believed that this is essentially caused by an inactivation of the enzyme by traces of Ag ions. The minimum purity of Pd is 99 %.

Electrolyte:

To secure an applicable long-term stability, as may be seen from Figures 7 and 4, a sufficient electrolyte volume is necessary, and changes of the electrolyte composition due to chemical reactions should be negligible. In most cases, KCl is used as the electrolyte. However, saturated KCl solution is not used because it causes an undesired Ag deposition on the cathode causing a changes of the probe performance and an increase of the dark current. Therefore, an electrolyte having a concentration of 0.75 M is preferred. In some cases, KOH solution can be used, however, KOH solutions have worse performances as compared with KCl.

As buffers, $KHCO_3$, $NaHCO_3$, $K_2CO_3$ + $KHCO_3$ and acetate buffers are used. To prevent concentration changes of the electrolyte due to $H_2O$ diffusion, $NaNO_3$ solution is added. Further, modified systems of electrolytes have been known. These contain ion exchanging diaphragms, or comprise electrolytes soaked in a diaphragm substrate, or dispersed in a gel of appropriate composition with mediators.

Envelope, electrode attachments, geometrical arrangement:

All materials used should have a high specific resistance and be inert to salt solutions. The arrangement should be such that between the electrodes a resistance of the order of $10^9$ ohms or greater can be maintained for a long time period. It has been found experimentally that the cathods should freely touch the (ideal) diaphragm. The geometrical probe arrangement should be such that incoming substances, e.g. $O_2$, may diffuse perpendicularly to the cathode surface area, i.e. the concentration gradient may follow the normal direction onto the cathode surface, and side diffusion may be prevented causing a slow decrease of the sensitivity by probe hysteresis and a change of the dynamic response. If the aforementioned requirements are met the output signal of the electrode system covered with an ideal diaphragm system and letting pass $O_2$ only is proportional to the $O_2$ partial pressure.

Nonlinearities can be caused by one of the following sources:

a) A sequential chemical sorption of $O_2$ on the cathode surface can be a source of nonlinearity. It can be removed by applying a current pulse of suitable duration and intensity;

b) chemical and physical impurities and $CO_2$ gas absorption could cause nonlinearity;

c) an excessive resistance of the Ag/AgCl anode represents another source of nonlinearity by sequential conversion of AgCl on the anode. Its resistance can change causing the probe (electrode system) performance to change as well;

d) another nonlinearity source might be increasing the cathode size; if there is no adequate homogenous interaction of the cathode with the diaphragm system some nonlinearity occurs. The size of the active area of the cathode takes part of the reaction;

e) another nonlinearity source might be the interaction with the diaphragm system; the diaphragm system contacting the electrode directly may be unsuitably designed which may cause nonlinearity as well.

Electrode system stability:

Regarding the electrode system stability a distinction can be made between short-term and long-term instability.

Short-term instability may be caused by:

a) Reduction of surface oxides: The initial probe instability disappears within a period of a few minutes to about 10 hours after the probe has been put into operation for the first time. This kind of instability may be of importance for mass production. For example, to prevent this instability, the probe is to be maintained at a constant polarization voltage (Biostator of Miles Laboratories, Inc.);

b) presence of $Br$, $NO_2$ or $CO_2$;

c) contamination of a Pt cathode with metal ions: This kind of instability may lead to long-term instability. To avoid this instability a sophisticated treatment technology and high purity of the materials used are needed;

d) interaction of the diaphragm system with the electrode system: Instability of this kind may be caused, e.g., by some movement of the covering diaphragm. To avoid this instability a more sophisticated design of the interface between the electrode system and the diaphragm system is required;

e) movement of the electrolyte layer between the cathode and the diaphragm system: For this kind of instability the same is valid as stated above under d);

f) pH value change: As may be seen from Figure 4, during probe operation KOH is formed, and the surrounding reaction volume becomes more alkaline. Thus, the polarization response is shifted which could cause a sensitivity change and thus short-term or a long-term instability, depending on the shape of the polarization response and the polarization voltage at which the electrode system is operated. To avoid this instability the electrode system should contain a storage reservoir filled with an adequate volume of electrolyte.

Long-term instability may be caused by:

a) Slow side reactions: This kind of instability is caused by chemisorption, physical adsorption of additives of the electrolyte, or by interfering reactions of the cathode with impurities of the electrolyte. To avoid this instability, only chemical substances of very high purity should be used, and before putting into operation, the cathode should be appropriately polished;

b) changes of the anode state: By slow anode dissolution and covering with AgCl its response and performance may change. The basic influences are a change of the active area, an increase of resistance due to a too thick AgCl layer, anode consumption, Ag elimination on the cathode, and an increase of the Cl concentration in the electrolyte. These instabilities could be prevented by a large area of the anode, high purity of the anode, material, suitable electrolyte concentration, and an appropriate technology of preparation operations;

c) wrong chlorination of AgCl anode;

d) adsorption of small particles on the anode: To avoid this effect an appropriate technology should be applied, and the preparatory operations should be carried out under high purity conditions;

e) conductive bridge between the electrodes: For the entire lifetime during which the electrode system is to be reliably operated, the resistance between the electrodes should be $\geq 10^9$ ohms. In some cases conductive channels are formed by electrolyte diffusion short-circuiting the electrodes and leading to a long-term instability.

Dark current:

In the ideal case, where the above-mentioned problems are avoided no current flows when no $O_2$ is present between the electrodes. Because of manufacturing imperfections, impurities, leakages and other reasons, a current flows between the electrodes even if there is no $O_2$ present; this current is called dark current. In a well designed electrode system the amount of the dark current can be ignored. If the dark current is large but constant, it can be electrically compensated. If, however, the dark current is not stable and has a considerable magnitude the probe cannot be used at all.

Sources of the dark current can be as follows:

1. Reduction of electrochemically active impurities on the cathode, in the electrolyte, or coming from the surroundings. To avoid this effect, only materials having high purity and chemical stability should be used;

2. reduction of $H_2O$ in the electrolyte solution by a high polarization voltage: To prevent this effect, the polarization voltage should be controlled;

3. insufficient insulation between the electrodes: The same procedure and remedies can be applied as described above under long-term instability. Materials recommended for the cathode insulation are glass and polytetrafluoroethylene (PTFE). Disadvantages of glass are that surface currents are difficult to detect in the electrode system, and the interface between bonding material and glass may be unsuitable;

4. oxygen dissolved in electrolyte: A dark current is caused by detection of $O_2$ in the electrolyte. The oxygen may enter into the electrolyte by diffusion through the walls of the envelope of the electrode system (see Figure 1).

Dynamic response of the electrode system:

The dynamic response of the electrode system is mainly determined by the transfer response of the electrode system. As stated before, for optimal operation of the electrode system of $O_2$ probes a very thin layer of electrolyte is required. In this case, the influence of the electrolyte on the dynamic response of the probe is negligible.

The following relations have been determined experimentally:

$\tau_{qs} \sim l$ and $l \ll d$    (1)

wherein $\tau_{qs}$ is the time period during which the probe response reaches 95 % of its maximum value,

d is the diameter of the cathode, and

l is the thickness of the electrolyte layer.

Condition (1), however, does not comply with the requirement of a quick removal of OH ions which could cause markable changes of the pH value of the electrolyte layer resulting in changes of the dynamic response without any dependence on the $O_2$ partial pressure.

The influence of the diameter of the cathode has been investigated within the range of 1 to 10 $\mu$m. With so small dimensions, the substance concentrations are equalized with a good velocity near the cathode by diffusion, and these electrodes do not require stirring.

Causes of probe dynamic response changes:

1. Change of the geometrical arrangement of the electrode (cathode) and the diaphragm resulting in a side diffusion of $O_2$;

2. interaction with the electrode system;

3. $O_2$ side diffusion from the electrolyte;

4. insufficient speed of $H_2O$ decomposition.

In the ideal case, the probe response should not show hysteresis. In real probes, however, hysteresis occurs frequently. It is caused by the following influences:

1. Size, shape and overall arrangement of the electrolyte storage reservoir;

2. size of the electrolyte layer;

3. electrochemical causes (adsorption);

4. stresses in diaphragms of the diaphragm system.

The interaction with the diaphragm system is the most significant influence of the above-mentioned influences on the probe dynamics.

Temperature influence:

Temperature influences the operation of the $O_2$ probe considerably. Especially, it influences the sensitivity and the response time. The probe response is determined by the $O_2$ transfer and the electrochemical reaction on the cathode (Figure 3). The speed of these processes depends exponentially on the temperature ($\sim e^{-E/kT}$). Accordingly, the influence of these two processes can be described in terms of the classical activation energies. It is known that the average change of probe parameters amounts 1 to 6 % per $^\circ$C. To measure with high accuracy, an exact temperature control ($\pm$ 0.1 $^\circ$C) is necessary. It has been found that superior thermal performance is achieved by using polytetrafluoroethylene for the diaphragm.

Elimination of temperature dependence:

1. By thermostating the probe;

2. by detection of the probe temperature, e.g. with a thermistor or other temperature sensors, and compensation of measurement results.

Influence of pressure:

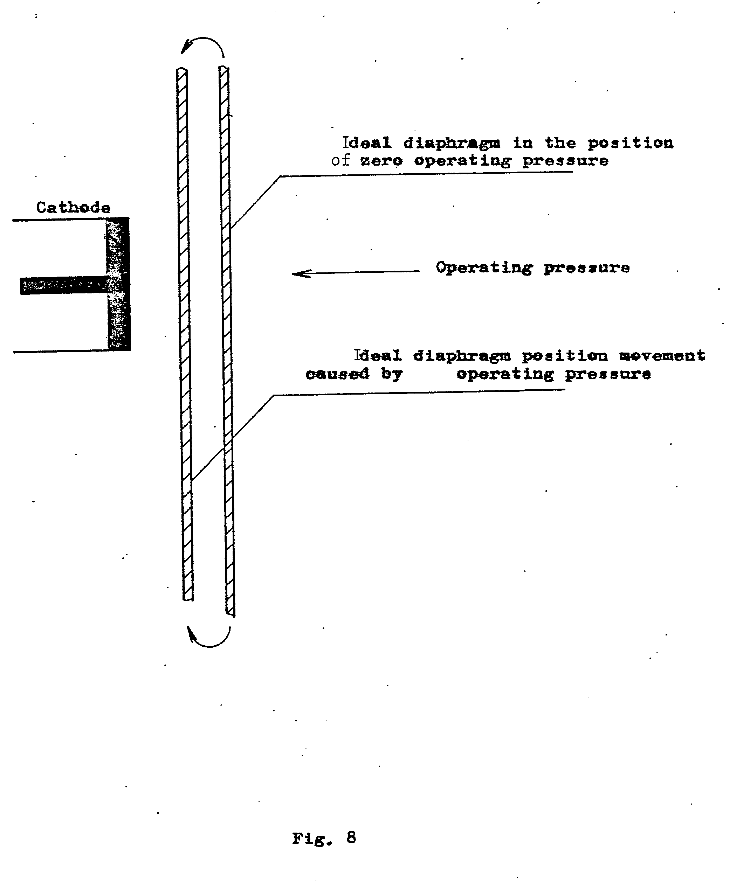

Figure 8 explains schematically the pressure influence. In the course of pressure changes shape and thickness of the electrolyte layer change which results in changes of the responses depending thereon. Thus, sensitivity, dynamic response and, to some extent, stability depend on the pressure.

It should be noted that for covering a probe a diaphragm system having a thickness of approximately 10 $\mu$m should be used. A small diaphragm thickness is necessary for achieving a low value of the response time constant. Pressure changes in the order of Pa units could have a non-negligible influence on the measurement.

In accordance with the present state of the art of measurements using enzymatic electrodes, a stirred vessel with an oxygen electrode is used covered with a diaphragm or diaphragm system which is provided with an enzyme. The solution in the reaction vessel is saturated with oxygen maintaining a constant level of oxygen in the solution. Buffers are added to the reaction solution securing a constant pH value. The entire reaction vessel is temperature controlled for eliminating the temperature dependence. Under these conditions the current of the oxygen electrode is proportional to the oxygen loss in the enzymatic reaction being in a relation to the concentration of the substance to be measured. In a large number of cases the relation is linear.

The main disadvantages of this arrangement are the complicated design and the necessity of meeting the requirements concerning the electrode, and the conditions under which the reactions are to be carried out.

An alternative method of measurement using enzymatic electrodes, two oxygen electrodes are placed in a reaction vessel, one of them being provided with an enzyme diaphragm. Using this arrangement the basic oxygen level in solution and the concentration of oxygen behind the enzyme diaphragm of the enzyme electrode, and thus, the $O_2$ loss during the enzymatic reaction can be measured. The reaction vessel is temperature controlled, and it contains a buffer solution so that a constant pH value may be maintained. A disadvantage of this system is again the complicated arrangement. Another disadvantage of this system is that the two oxygen electrodes must have the same long term specifications.

It is the object of the present invention to provide a probe for enzymatic measurements which overcomes the above-mentioned disadvantages of prior art electrode systems and allows to achieve a high sensitivity and long term stability of the electrode parameters.

The above object is achieved according to the claims. The dependent claims relate to preferred embodiments.

The probe for enzymatic measurements in accordance with the present invention is a symmetrical probe: it is characterized by
- a glass body, the measuring end thereof having a polished front surface, and comprising an electrolyte reservoir,
- a covering diaphragm covering the measuring end with the polished front surface of the glass body,
- a first metal measuring electrode and a second metal measuring electrode provided within the glass body and ending at the measuring end thereof, being covered by the diaphragm, and being connected to connecting wires provided in the glass body,
- an electrolyte provided in the electrolyte reservoir,
- an Ag/AgCl reference electrode provided in the longitudinal axis of the electrolyte reservoir, and being connected to a connecting wire,
- a glass tube provided around the Ag/AgCl reference electrode,
and
- an auxiliary electrode provided on the glass tube, being arranged symmetrically with respect to both the measuring electrodes, and being connected to a connecting wire.

According to a preferred embodiment, the first and second metal measuring electrodes are made of Pt or of Au.

In accordance with another embodiment of the present invention, the auxiliary electrode is made of Ag, Pt or Pd.

In accordance with another embodiment of the present invention, the front surface of the glass body is polished and has a surface roughness within the range of 0.1 to 5 $\mu$m.

Another preferred embodiment of the present invention is characterized in that the glass body is made of a quartz glass having the same thermal elongation coefficient as Pt or Au.

The concept of the present invention leads to a number of important advantages which are due to the following facts:

The measuring electrode, and eventually also the input wires, are sealed in the glass body so that there is an adequate insulation between the measuring electrodes resulting in a suitable stability of the electrode parameters.

The two measuring electrodes made of Pt or of Au are manufactured by the same process, i.e. they are polished in the same manner, the same sealing is used for sealing- in, and thus, in the symmetrical arrangement, influences due to the manufacturing process are eliminated.

The platinum measuring electrodes have a very accurately defined active surface area, and the active areas of the electrodes differ only by less than 1 % from each other, thus securing that the difference of the output signals of these electrodes is proportional to the oxygen loss in the enzymatic reaction, and, if there is no substance to be measured contained in the measured solution, the difference of the output signals of the measuring electrodes is symmetrically located in relation to the measuring electrodes. By these precautions it is achieved that the failures due to potential setting of the measuring electrodes are of the same value or differ only by a very small amount because of the finite electrolyte conductivity.

The probe contains potential control means being realized by the auxiliary electrode which secures that there is no current load on the reference electrode.

The probe is provided with an adequately dimensioned storage reservoir of electrolyte so that changes of its pH value may be small, and, at the same time, the measuring electrodes are of the same composition in the area contacting the electrolyte.

The probe is preferably manufactured as a massive unit of quartz glass in which there are no substances used which could cause any unwanted leakage path between the electrodes (i.e. measuring, reference and auxiliary electrodes). The front surface is polished so that, because of the very good connection of Pt and Au with glass, the chemical reaction takes place on the front surface only.

A further advantage resides in the fact that the diaphragm system is not integrated with the probe but is freely contacting, which allows all-purpose applications. The enzymatic diaphragm can be prepared as demanded for a given kind of measurement, for example, to measure the phenol content in water, etc.

Another advantage of the symmetric probe according to a preferred embodiment of the present invention is that nonlinearities are limited in a peculiar way because the effects causing nonlinearities result only in an insignificant failure in the difference of the output signals of the measuring electrodes (e. g. influences of impurities). Similiarly, the symmetrical probe of the present invention has improved long-term and short-term stability since some causes of long-term and short-term instability are compensated by the symmetrical arrangement of the measuring electrodes (e.g. movement of the electrolyte layer, electrolyte pH value, and so on). Another advantage of the arrangement according to the present invention is the compensation of the dark current which achieved by the fact that the measuring electrodes have the same size and surface areas, and further because the electrodes are manufactured and treated together at the same time. Another advantage of the concept of the present invention is that some negative influences causing a hysteresis of the electrodes are limited to some extent thus improving the dynamic response of the probe. Especially, the geometrical arrangement of the diaphragm system, the shape of the electrolyte reservoir and the thickness of the thin electrolyte layer improve the overall performance by eliminating some causes for electrode hysteresis.

A further advantage of the symmetrical electrode arrangement of the present invention is that the temperature dependence and the pressure dependence are partly improved by the fact that the difference in the output signals of the measuring electrodes depends less on temperature and pressure than the output of a simple oxygen probe provided with an enzymatic diaphragm.

Other advantages of the symmetrical probe arrangement for enzymatic measurements will be apparent from the following description of design and operation of the probes according to the present invention.

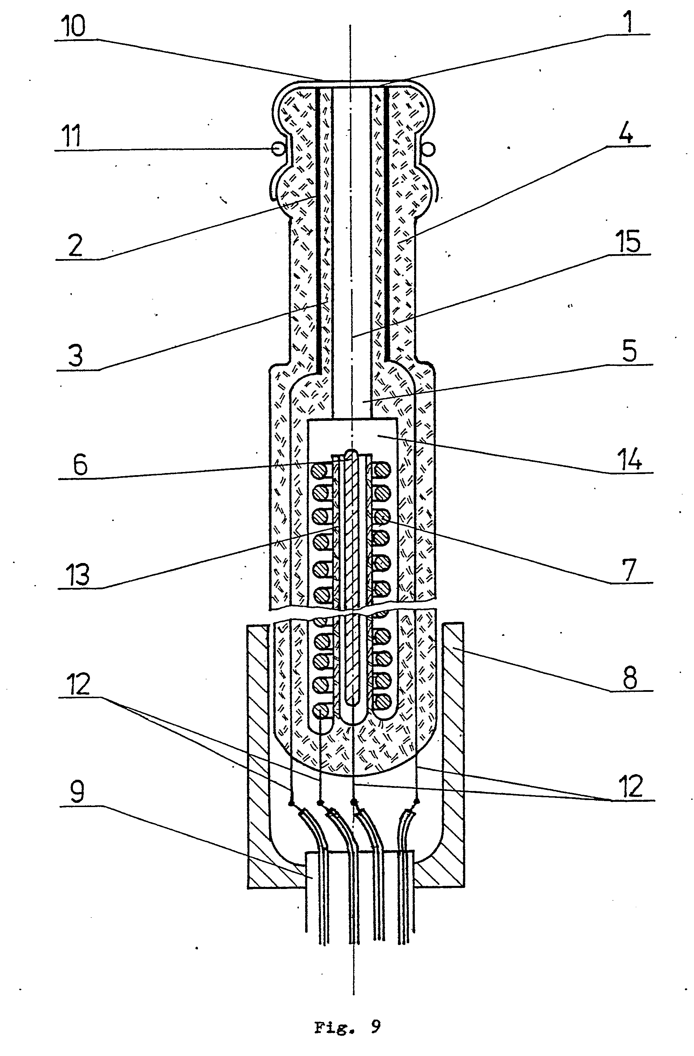

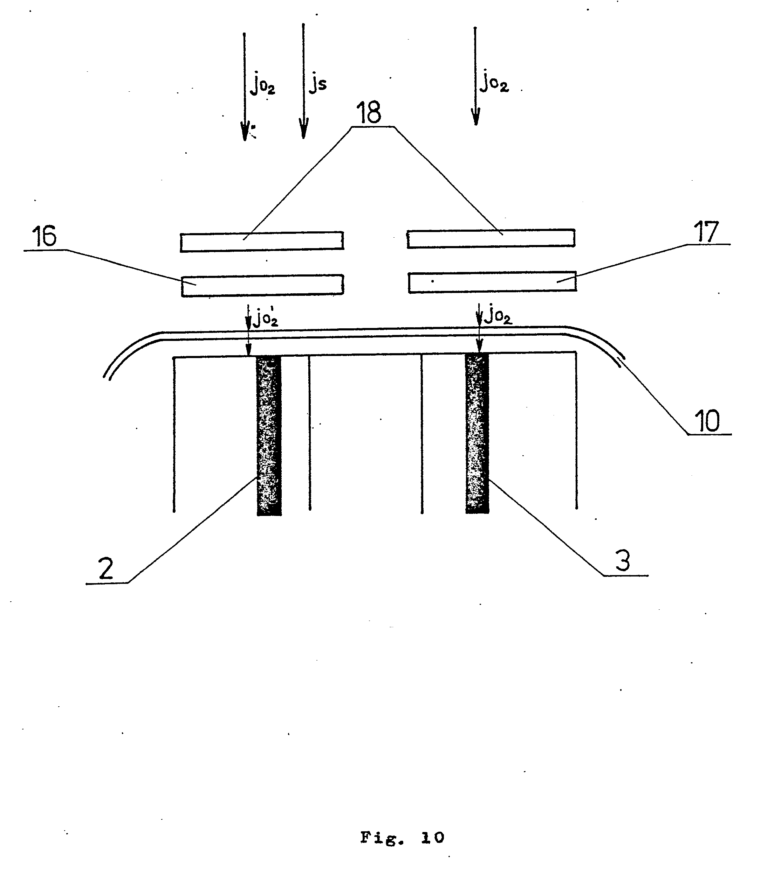

In the following, embodiments of the invention will be described in detail by way of example, with reference to Figures 9 to 11. Figure 9 is a schematic representation of the cross-section of an embodiment of the present invention. Figure 10 shows one of the possible arrangements of diaphragm systems, each comprising a covering diaphragm 10, an enzymatic diaphragm 16 provided at the side of the measuring electrode 2 and a control diaphragm 17 provided at the side of the measuring electrode 3. The flux of $O_2$, $j_{O2}$, and $j_{O2}'$, respectively, and the flux of the substrate, $j_s$, is indicated in Figure 10 .

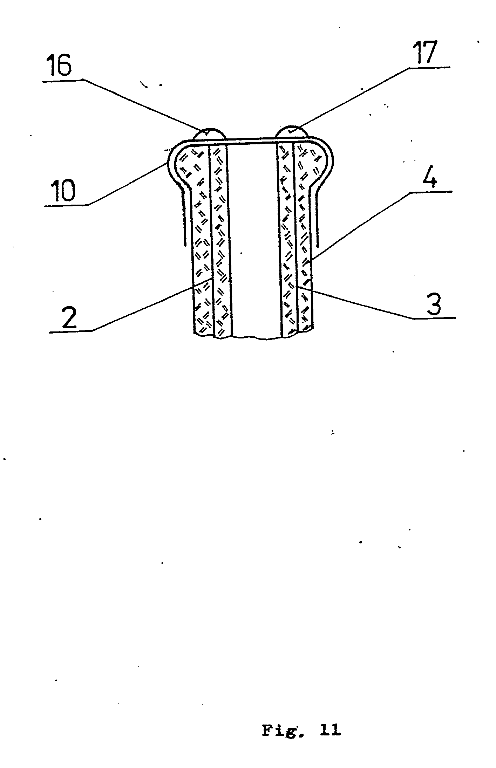

Figure 11 shows an example of deposited diaphragms 16 and 17 provided on the covering diaphragm 10 which is attached to the glass body 4 of the probe. The deposited diaphragms 16 and 17 are located in the vicinity of the measuring electrodes 2 and 3.

The symmetrical probe for enzymatic measurements shown in Figure 9 comprises a glass body 4 in which the first measuring electrode 2 and the second measuring electrode 3 are arranged which are connected to thin connecting wires 12 provided within the body 4 of the probe. Further, in the body 4 an electrolyte reservoir 14 is provided. In the longitudinal axis 15 of the body 4 or of the electrolyte reservoir 14, respectively, an Ag/AgCl reference electrode 6 is symmetrically arranged with respect to the first and second measuring electrodes 2, 3. The measuring electrodes 2, 3 may be made of Pt or Au. A glass tube 13 is provided around the Ag/AgCl reference electrode 6 which forms an integral part of the body 4 of the probe. On the glass tube 13, an auxiliary electrode 7 is provided which is wound thereon.

The thin connecting wires 12 of these two electrodes are also provided within the body 4 of the probe.

Over the front surface of the probe 4, which is polished and has a surface roughness within the range of 0.1 to 5 $\mu$m, a covering diaphragm 10 is pulled which is attached to the body 4 of the probe by means of a holding ring 11. The body 4 of the probe is fixed in a holder 8 made of a plastic, for example silicon, wherein the connecting cable 9 connected to the connecting wires 12 of the different electrodes is arranged.

The operation of the symmetrical probe is as follows:

The main function of the symmetrical probe according to the present invention is the simultaneous measurement of the oxygen level and its loss because of the enzymatic reaction in the solution to be measured in such a peculiar manner that if there is no substance to be measured present, the difference of the currents flowing through the first and second measuring electrodes 2, 3 is equal to zero, for a long time period. This operation is secured in such a manner that on one of the symmetrical measuring electrodes, e.g. measuring electrode 2, as may be seen from Figure 10, an enzymatic diaphragm 16, for example comprising saccharose-oxidase immobilized in glutaraldehyd, is deposited thereon or attached thereto, and on the other measuring electrode 3, a reference diaphragm 17 is deposited or attached thereto, the reference diaphragm 17 being manufactured by the same technology as used for manufacturing the enzymatic diaphragm 16, however, containing no enzyme. The reference diaphragm 17 is, for example, also a diaphragm comprising glutaraldehyde when the enzymatic diaphragms 16 comprises an enzyme immobilzed in glutaraldehyde. These diaphragms 16 and 17 are covered by a controlling diaphragm 18. The same $O_2$ volume and the same volume of substrate to be detected are coming into contact with the two measuring electrodes 2, 3 from the sample volume. The resulting incoming $O_2$ flow which is to be detected is determined by the operational features of the covering diaphragm 10, the kinetics of the electrochemical reaction and the operational features of the measuring electrodes 2 and 3. These influences are the same for the two measuring electrodes 2 and 3, and therefore, they do not contribute to the difference of the currents flowing between the measuring electrodes 2 and 3. The difference of the currents flowing between the two measuring electrodes 2 and 3 being proportional to the difference of incoming oxygen volumes flowing through the diaphragm system with the enzyme and through the diaphragm system without any enzyme, depends on the oxygen quantity consumed during the enzymatic reaction only.

The amount of oxygen consumed during an enzymatic reaction is proportional to the substrate flux incoming to the enzymatic diaphragm 16 and proportional to the concentration of the substrate contained in the sample volume.

By using the symmetrical probe according to the present invention for enzymatic measurements, influences of temperature, inhomogeneity of the diffusion performances of the covering diaphragm 10 and other influences affecting the flux of oxygen are more or less compensated. In the real case, these influences cannot be completely compensated. The output signal of the symmetrical probe will mainly be determined by the chemical reaction of the substrate with the enzyme and the diffusion performances of the diaphragm system for the substrate.

The specific structure of the probe according to the present invention leads to an improvement of the following operational responses:

Nonlinearities caused by sequential $O_2$ adsorption or physical or chemical adsorption of other substances on the cathode surface can be reduced because adsorption takes place under the same conditions at the measuring electrodes 2 and 3, and thus, a compensation occurs. Only the calibration response of the electrode is changed.

Nonlinearities caused by the state of the Ag/AgCl reference electrode 6 (anode) are reduced because of the symmetrical arrangement of this reference electrode, and because the measuring electrodes 2 and 3 are influenced in the same manner, and thus, also the symmetrical arrangement of the measuring electrodes 2 and 3 contributes to the reduction of nonlinearities.

By the symmetrical arrangement of the measuring electrodes 2 and 3, also the short-term and long-term stability is improved because of the practically identical behaviour of these two measuring electrodes.

Similarly, the dark current is reduced because of the symmetry of the measuring electrodes 2 and 3.

Finally, the symmetrical arrangement of the electrodes leads also to an improvement with respect to the temperature and pressure stability of the probe operation and also to an improvement of the dynamic response.

The symmetrical probe of the present invention can be used in a large number of technical fields. For example, it can be applied in biochemistry, biology for a very large number of analytical purposes, for example in the manufacture of vaccins and sera, in the biochemical technology and microbiology, in human and veterinary medicine, in biotransformation control and in fermentation processes.

**Claims**

1. A symmetrical probe for enzymatic measurements,
**characterized** by
- a glass body (4), the measuring end thereof having a polished front surface (1), and comprising an electrolyte reservoir (14),
- a covering diaphragm (10) covering the measuring end with the polished front surface (1) of the glass body (4),
- a first metal measuring electrode (2) and a second metal measuring electrode (3) provided within the glass body (4) and ending at the measuring end thereof, being covered by the diaphragm (10), and being connected to connecting wires (12) provided in the glass body (4),
- an electrolyte (5) provided in the electrolyte reservoir (14),
- an Ag AgCl reference electrode (6) provided in the longitudinal axis (15) of the electrolyte reservoir (14), and being connected to a connecting wire (12),
- a glass tube (13) provided around the Ag/AgCl reference electrode (6),
and
- an auxiliary electrode (7) provided on the glass tube (13), being arranged symmetrically with respect to both the measuring electrodes (2, 3), and being connected to a connecting wire (12) (Fig. 9).

2. The probe according to claim 1, characterized in that the covering diaphragm (10) is fixed at the measuring end of the glass body (4) by means of a holding ring (11).

3. The probe according to claims 1 and 2, characterized in that the other end of the glass body (4) of the probe is fixed to a holder (8) in which a cable (9) is arranged which is connected to the connecting wires (12) of the electrodes.

4. The probe according to claims 1 to 3, characterized in that the measuring electrodes (2, 3) are sealed in the glass body (4).

5. The probe according to claims 1 to 4, characterized in that the glass tube (13) forms an integral part of the glass body (4) of the probe which is preferably connected to the glass body (4) at the other end thereof.

6. The probe according to claims 1 to 5, characterized in that the measuring electrodes (2, 3) are concentrical tube-like electrodes arranged coaxially with respect to the longitudinal axis (15) of the electrolyte reservoir and the glass body (4).

7. The probe according to claims 1 to 6, characterized in that the electrolyte reservoir (14) is provided coaxially to the central longitudinal axis of the glass body (4).

8. The probe according to claims 1 to 7, characterized in that the first and the second measuring electrodes (2, 3) are made of Pt or of Au.

9. The probe according to claims 1 to 8, characterized in that the auxiliary electrode (7) is made of Ag, Pd or Pt.

10. The probe according to claims 1 to 9, characterized in that the polished front surface (1) of the glass body (4) has a roughness within the range of 0.1 to 5 $\mu$m.

11. The probe according to claims 1 to 10, characterized in that the glass body (4) is made of a quartz glass the thermal elongation factor of which being the same as the thermal elongation factor of the material of the measuring electrodes (2, 3).

12. The probe according to claims 1 to 11, characterized in that it comprises a diaphragm system comprising a covering diaphragm (10), an enzymatic measuring diaphragm (16) and a reference diaphragm (17) provided in the vicinity of the active end of the measuring electrodes (2 and 3, respectively).

13. The probe according to claim 12, characterized in that the enzymatic measuring diaphragm (16) and/or the reference diaphragm (17) is deposited in the covering diaphragm (10).

Fig. 1

Fig. 2

Fig. 3

EP 0 380 804 A1

Fig. 4

Area determining the basic probe specification
(sensitivity,dynamic performance,temperature response, etc.)

Area determining    both stability and selectivity

Cathode
(electrode)

Electrolyte

Fluid Layer

Volume of the substance
(solution) to be measured

Ideal diaphragm

The space in
which the con-
centration
profile change
takes part in
the detection
because of the
presence of both
electrode and
diaphragm system

Direction of        idealized
substances transfer from
environment to be measured
towards the probe

The volume concentrations
of the substances are constant

Electrode    System

Diaphragm
System

The environment in which
the concentration is measured

Area of substance transfer
$(O_2, H_2O_2,$ etc.)

$O_2$

Cathode $\ominus$         Anode $\oplus$

~650 – 700 mV

KCL + buffer

Pt
Au
Ag
C

Ag
Pd

$2e^-$   1. $O_2 + 2H_2O + 2e^- \longrightarrow H_2O_2 + 2OH^-$

$2e^-$   2. $H_2O_2 + 2e^- \longrightarrow 2OH$

3. $OH^- + K^+ \longrightarrow KOH$ (pH change compensation by buffer)

$OH^-$   4. $Ag + Cl \longrightarrow AgCl + e^-$

3. $OH^-$ formed at the cathode should quickly diffuse from the cathode

Fig. 5

Fig. 6

Fig. 7

Cathode

Ideal diaphragm in the position
of zero operating pressure

← Operating pressure

Ideal diaphragm position movement
caused by       operating pressure

Fig. 8

Fig. 9

$j_{o_2}$ $j_s$ 18 $j_{o_2}$

16

17

$j_{o_2}'$ $j_{o_2}$

10

2

3

Fig. 10

Fig. 11

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | EP-A-0 078 590 (CORNING GLASS WORKS) * Page 1, line 14 - page 7, line 8; page 12, line 26 - page 16, line 20; figures 1,2,3,10,11,12,13 * | 1,2,3,7 ,8,9,12 ,13 | G 01 N 27/30 |
| A | EP-A-0 027 005 (W.J. ALBERY & C.E.W. KAHN) * Figure 1; page 4, line 27 - page 12, line 22; figure 2; claims 3-8 * | 1,2,3,4 ,6,7,8, 9 | |
| A | US-A-3 325 378 (BECKMAN INSTRUMENTS, INC.) * Entire document * | 1,2,3,7 ,8,9 | |
| A | FR-A-2 376 412 (B. HAGIHARA) * Figures 1-4; page 7, line 31 - page 12, line 19 * | 1,2,3,4 ,6,7,8, 9 | |
| A | US-A-4 077 861 (TELEDYNE INDUSTRIES INC.) * Entire document * | 1,2,3,6 ,7,9 | |
| A | DE-A-2 627 487 (BAYER AG) * Page 4, line 15 - page 5, line 12; figure 1 * | 1 | TECHNICAL FIELDS SEARCHED (Int. Cl.5)<br><br>G 01 N 27/00 |
| A | FR-A-1 531 382 (CESKOSLOVENSKA AKEDEMIE VED) * Entire docment * | | |

The present search report has been drawn up for all claims

| Place of search | Date of completion of the search | Examiner |
|---|---|---|
| THE HAGUE | 14-05-1990 | BROCK T.J. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
....................................................................
& : member of the same patent family, corresponding document

EPO FORM 1503 03.82 (P0401)